# FASCICULE DE BREVET EUROPEEN

(11) **EP 3 263 411 B1**
(45) Date de publication et mention de la délivrance du brevet: **09.01.2019**
(21) Numéro de dépôt: 17177319.5
(22) Date de dépôt: 22.06.2017
(51) Int. Cl.: B60S 1/40

(54) **CONNECTEUR ET DISPOSITIF D'ESSUYAGE POUR ASSEMBLER UN BRAS D'ACTIONNEMENT DE VÉHICULE AUTOMOBILE À UN BALAI D'ESSUIE-GLACE**
ANSCHLUSSSTÜCK UND WISCHVORRICHTUNG FÜR DEN ZUSAMMENBAU EINES BETÄTIGUNGSARMS EINES KRAFTFAHRZEUGS MIT EINEM SCHWEIBENWISCHERBLATT
CONNECTOR AND WIPER DEVICE FOR ASSEMBLING A DRIVE ARM OF A MOTOR VEHICLE TO A WINDSCREEN WIPER

(30) Priorité: 27.06.2016 FR 1655937
(43) Date de publication de la demande: 03.01.2018
(73) Titulaire: Valeo Systèmes d'Essuyage, 78322 Le Mesnil Saint Denis (FR)
(72) Inventeur: HOUSSAT, Stéphane, 63500 ISSOIRE (FR); GAUCHER, Vincent, 63500 ISSOIRE (FR); POTON, Eric, 63500 ISSOIRE (FR)
(74) Mandataire: Vincent, Catherine Marie Marguerite

(56) Documents cités:
- WO-A2-2006/117308
- FR-A1- 3 023 801

## Description

La présente invention concerne un connecteur pour assembler un bras d'actionnement de véhicule automobile à un balai d'essuie-glace. L'invention concerne aussi un dispositif d'essuyage comprenant un connecteur.

Les balais plats, encore appelés « flat blade », présentent la particularité de ne plus comporter de structure à palonniers. Ils comprennent au moins une vertèbre longitudinale qui rigidifie la lame d'essuyage de manière à favoriser l'application de cette lame sur la vitre du véhicule. Cette vertèbre est cintrée et son cintrage permet de maintenir la lame plaquée contre la vitre, même aux extrémités longitudinales du balai.

Ces balais sont raccordés à des bras d'actionnement de forme appropriée qui sont entrainés dans un mouvement de va-et-vient angulaire. On rappellera à cet égard qu'il existe toutes sortes de bras d'actionnement, comme les bras crochets, les bras à axe de pivotement latéral, les bras à clippage longitudinal, etc.

Le balai est rattaché au bras d'actionnement par deux types de moyens de connexion, à savoir des moyens permettant le raccordement du bras d'actionnement à un connecteur, soit directement, soit indirectement par l'intermédiaire d'une pièce d'adaptation et des moyens d'assemblage et de verrouillage du connecteur au balai.

Par ailleurs, de manière courante, il existe deux types de connecteurs pour relier un bras d'entraînement au balai d'essuyage : soit un connecteur à liaison de type connu sous le terme anglais « side-lock » ou « side-hook », soit un connecteur à liaison du type connu sous le terme anglais « top-lock».

Une liaison de type « side-lock » ou « side-hook » est une liaison comprenant des moyens de connexion déportés sur le côté pour relier le bras d'entraînement au connecteur. Cependant, le verrouillage des moyens de connexion déportés peut présenter une stabilité insuffisante, autorisant un déplacement intempestif du connecteur par rapport au balai.

Un des buts de la présente invention est de proposer un connecteur de type « side-lock » ou « side-hook » dont les moyens de connexion déportés peuvent être verrouillés avec une meilleure stabilité. FR 3.023.801 divulgue un connecteur selon le préambule de la revendication 1.

A cet effet, l'invention a pour objet un connecteur pour assembler un bras d'actionnement de véhicule automobile à un balai d'essuie-glace, ledit connecteur comprenant :
- un dispositif de connexion configuré pour coopérer avec une embase d'un balai d'essuie-glace pour fixer le connecteur au balai d'essuie-glace de manière réversible,
- une interface latérale portée par une paroi latérale du dispositif de connexion, ladite interface comportant un deuxième axe transversal destiné à être relié à un bras d'actionnement,
caractérisé en ce que le dispositif de connexion comporte un premier élément destiné à coopérer avec un logement de l'embase du balai d'essuie-glace, le premier élément étant relié à la paroi latérale par au moins un pontet.

Le premier élément peut être un capot configuré pour fermer le logement.

Le premier élément peut porter au moins un moyen de maintien destiné à être inséré dans le logement pour coopérer avec au moins un élément du logement.

Le connecteur peut ainsi être assemblé de manière stable au balai. En outre, à l'état assemblé, le moyen de maintien est protégé à l'intérieur du logement.

Selon un exemple de réalisation, au moins une patte latérale de verrouillage du dispositif de connexion fait saillie perpendiculairement de la paroi latérale en direction du logement, la patte latérale de verrouillage étant configurée pour coopérer avec une bordure latérale du balai d'essuie-glace agencée du côté opposé au logement. Le dispositif de connexion comporte ainsi par exemple deux pattes latérales de verrouillage situées aux extrémités longitudinales de la paroi latérale.

Du côté inférieur du balai, c'est-à-dire du opposé au côté de l'embase, les pattes latérales de verrouillage viennent se clipper sur la bordure latérale du flanc du balai. Ce clippage est rendu possible du fait que les moyens de maintien retiennent le premier élément à l'embase. On dispose ainsi d'un verrouillage à la fois en partie supérieur et en partie inférieur du connecteur, ce qui assure un maintien stable et durable du connecteur au balai.

Selon une ou plusieurs caractéristiques du connecteur, prise seule ou en combinaison :
- le dispositif de connexion comporte un moyen de maintien configuré pour coopérer par emboitage élastique avec au moins un élément agencé à l'intérieur du logement de l'embase du balai d'essuie-glace,
- le moyen de maintien comporte au moins une paire de pattes élastiques configurées pour coopérer par emboitage élastique avec un premier axe transversal agencé à l'intérieur du logement,
- les pattes élastiques sont formées dans un socle du dispositif de connexion fixé sous le premier élément, le socle présentant une forme de cadre, une paire de pattes élastiques étant formée dans chaque paroi longitudinale du cadre,
- le dispositif de connexion comporte un moyen de maintien comprenant deux crochets élastiques agencés aux deux extrémités longitudinales du premier élément, chaque crochet élastique étant configuré pour coopérer avec un pion cylindrique transversal complémentaire agencé à l'intérieur du logement,
- le dispositif de connexion comporte un moyen de maintien comprenant au moins deux faces latérales opposées, configurées pour venir en butée sur des parois latérales du logement,
- le dispositif de connexion comporte au moins une paire de joues, chaque joue portant deux faces latérales opposées,
- l'interface latérale porte au moins une nervure de rigidification reliant un fond de l'interface au dos d'une patte latérale de verrouillage,
- le dispositif de connexion comporte au moins une plaque de renfort portée par le premier élément, la plaque de renfort étant configurée pour s'insérer dans le logement de l'embase, un dégagement à fond cylindrique complémentaire à un premier axe transversal du logement étant ménagé dans la plaque de renfort pour guider le dispositif de connexion dans l'embase.

L'invention a également pour objet un dispositif d'essuyage, caractérisé en ce qu'il comporte un connecteur tel que décrit précédemment.

La description qui va suivre en regard des dessins annexés, donnés à titre d'exemples non limitatifs, fera bien comprendre en quoi consiste l'invention et comment elle peut être réalisée.
La figure 1 montre une vue en perspective d'un dispositif d'essuyage.
La figure 2 montre une vue en perspective éclatée du dispositif d'essuyage de la figure 1.
La figure 3 montre une vue en perspective du dispositif d'essuyage de la figure 2 à l'état désassemblé.
La figure 4 montre une vue en perspective de dessous d'un connecteur du dispositif d'essuyage de la figure 3.
La figure 5 montre une vue de face du dispositif d'essuyage de la figure 3 à l'état assemblé.
La figure 6 montre une vue de dessous du dispositif d'essuyage de la figure 5.
La figure 7 montre une vue en perspective d'un deuxième exemple de réalisation d'un dispositif d'essuyage à l'état désassemblé.
La figure 8 montre une vue en perspective du connecteur du dispositif d'essuyage de la figure 7.
La figure 9 montre une vue en perspective d'un troisième exemple de réalisation d'un dispositif d'essuyage à l'état désassemblé.
La figure 10 montre une vue en perspective de dessous d'un connecteur du dispositif d'essuyage de la figure 9.

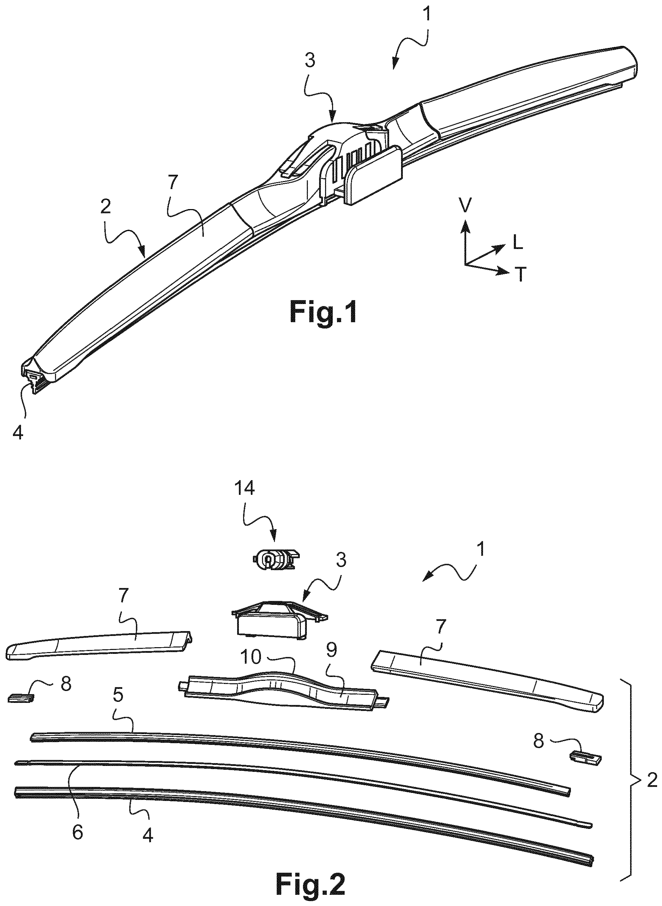

Dans la suite de la description, on adoptera à titre non limitatif des directions longitudinale, verticale et transversale indiquées sur la figure 1 par le trièdre (L, V, T) fixe par rapport au balai d'essuie-glace 2. La direction longitudinale L correspond à la direction principale du balai d'essuie-glace 2 mis à plat.

Les éléments identiques ou similaires seront désignés par les mêmes chiffres de référence.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées ou interchangées pour fournir d'autres réalisations.

Les figures 1 et 2 montrent une vue générale d'un dispositif d'essuyage 1 comprenant un balai d'essuie-glace 2 et un connecteur 3 destiné à assembler un bras d'actionnement d'un mécanisme motorisé d'essuyage d'un véhicule automobile au balai d'essuie-glace 2.

Le balai d'essuie-glace 2 est du type balai plat (ou "flat blade" en anglais), qui est d'orientation principale longitudinale L lorsque mis à plat.

Le balai 2 comporte une lame d'essuyage 4, une monture de support 5 et au moins une vertèbre de rigidification 6 (appelée « spline » en anglais) longitudinale. Dans cet exemple de réalisation, la vertèbre de rigidification 6 et la lame d'essuyage 4 sont portées par la monture de support 5.

Le balai 2 comporte aussi un aileron 7 (formant ce qui est appelé un « spoiler ») qui est conformé aérodynamiquement pour que le vent relatif qui est produit par le déplacement du véhicule produise un effort tendant à plaquer le balai d'essuie-glace 2 sur le panneau vitré. L'aileron 7 est par exemple formé en deux parties s'assemblant à la monture de support 5 de part et d'autre du connecteur 3.

L'aileron 7 et la lame d'essuyage 4 sont en matériau souple. Ils peuvent être obtenu par moulage ou extrusion d'un ou de plusieurs matériaux.

La vertèbre de rigidification 6 est par exemple formée d'un corps en un seul tenant, comprenant par exemple une bande métallique plane qui est notamment cintrée verticalement, conférant une forme courbe au balai 2 permettant que les efforts d'appui exercés par le bras d'entraînement soient répartis sur toute la longueur de la lame d'essuyage 4 lorsque le balai d'essuie-glace 2 est en appui sur le panneau vitré du véhicule.

Chaque extrémité longitudinale du balai d'essuie-glace 2 porte un embout d'extrémité 8 qui réalise le blocage de la vertèbre de rigidification 6 et de la lame d'essuyage 4 en coulissement longitudinal par rapport à la monture de support 5 et l'aileron 7.

Dans cet exemple de réalisation, le balai 2 comporte également une monture centrale 9 comprenant une embase 10 dans laquelle est ménagé un logement 11. Un premier axe transversal 12 est agencé à l'intérieur du logement 11. L'axe transversal 12 s'étend perpendiculairement entre deux parois 13 du logement 11 parallèles et longitudinales.

La monture centrale 9 est articulée avec les ailerons 7 et présente également une forme conformée aérodynamiquement. Bien que non représenté, les ailerons 7 et la monture centrale 9 peuvent aussi être réalisés en une seule partie, l'embase 10 pouvant être intégrée au balai 2 ou à une plateforme fixée au balai 2.

Pour assembler un bras d'actionnement au balai d'essuie-glace 2, le dispositif d'essuyage 1 comporte un connecteur 3.

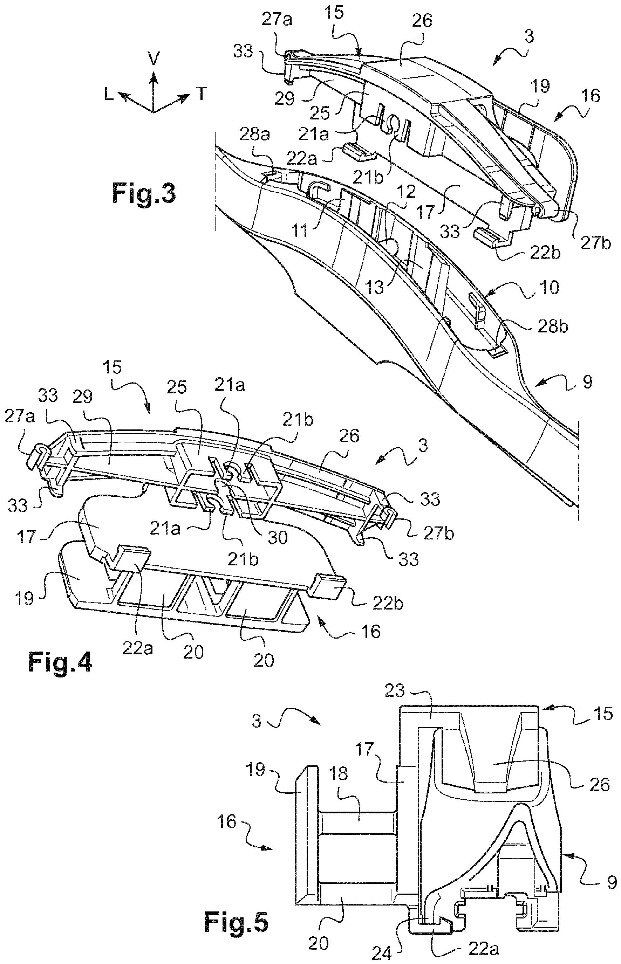

Mieux visible sur les figures 3 à 6, le connecteur 3 comporte un dispositif de connexion 15 et une interface latérale 16 portée par une paroi latérale 17 du dispositif de connexion 15.

L'interface latérale 16 comporte un deuxième axe transversal 18, similaire au premier axe transversal 12. Les axes 12, 18 sont aptes à être reliés, directement ou par l'intermédiaire d'un adaptateur 14 (figure 2), à un bras d'actionnement.

Pour chaque type d'attache du bras d'actionnement, comme par exemple des bras crochets, des bras à axe de pivotement latéral, des bras à clipsage / encliquetage longitudinal, etc. on aura un adaptateur 14 spécifique, mais chacun de ces adaptateurs 14 s'adapte au même connecteur 3 par une interface standard.

Le deuxième axe transversal 18 est agencé perpendiculairement entre la première paroi latérale 17 et une deuxième paroi latérale 19 de l'interface 16, parallèlement au premier axe transversal 12 (figures 3 et 5). Les parois latérales 17, 19 sont parallèles entre elles et sont reliées à leurs bases par un fond 20 formé par au moins une barre ou plaque transversale, de manière à former un logement de section transversale en forme de « U ».

L'interface latérale 16 permet ainsi de déporter latéralement l'axe transversal relié au bras d'actionnement (connu sous le nom de « side-lock ou side-hook » en anglais).

Le dispositif de connexion 15 est configuré pour coopérer avec l'embase 10 du balai 2 afin de fixer de manière réversible le connecteur 3 au balai d'essuie-glace 2.

Pour cela, le dispositif de connexion 15 comporte un premier élément 26 relié à la paroi latérale 17 par au moins un pontet 23, le premier élément 26 étant destiné à coopérer avec le logement 11 de l'embase 10 du balai d'essuie-glace 2. Le pontet 23 s'étend par exemple sensiblement perpendiculairement à la paroi latérale 17.

Le premier élément 26 est par exemple un capot destiné à fermer le logement 11.

Le premier élément 26 peut porter au moins un moyen de maintien destiné à être inséré dans le logement 11 pour coopérer avec au moins un élément du logement 11. A l'état assemblé, le moyen de maintien est ainsi protégé à l'intérieur du logement 11.

Les figures 3 à 6 représentent un premier exemple de réalisation du connecteur 3.

Dans cet exemple, le dispositif de connexion 15 comporte au moins un moyen de maintien 21a, 21b, 27a, 27b configuré pour coopérer par emboitage élastique avec au moins un élément 12, 28a, 28b agencé à l'intérieur du logement 11 de l'embase 10 du balai d'essuie-glace 2.

Le moyen de maintien comporte par exemple au moins une paire de pattes élastiques 21a, 21b configurées pour coopérer par emboitage élastique avec le premier axe transversal 12 agencé à l'intérieur du logement 11 de l'embase 10 du balai d'essuie-glace 2 (figures 3 et 4). L'interstice situé entre les pattes élastiques 21a, 21b en regard défini par exemple une forme générale cylindrique complémentaire à une section transversale du premier axe transversal 12.

Les pattes élastiques 21a, 21b sont par exemple formées dans un socle 25 du dispositif de connexion 15 fixé sous le premier élément 26, le socle 25 présentant une forme de cadre, une paire de pattes élastiques 21a, 21b étant formée dans chaque paroi longitudinale du cadre (figure 4). A l'état assemblé, le socle 25 est entièrement inséré dans le logement 11. Les pattes élastiques 21a, 21b sont ainsi protégées et dissimulées à l'intérieur du logement 11.

Le dispositif de connexion 15 peut comporter un moyen de maintien comprenant deux crochets élastiques 27a, 27b agencés aux deux extrémités longitudinales du premier élément 26, chaque crochet élastique 27a, 27b étant configuré pour coopérer avec un pion cylindrique transversal 28a, 28b complémentaire agencé à l'intérieur du logement 11. Les pions cylindriques 28a, 28b s'étendent dans la direction transversale T et sont agencés dans deux petits renfoncements aux deux extrémités du logement 11 de l'embase 10, dans la partie supérieure du logement 11.

Le dispositif de connexion 15 peut comporter en outre au moins une plaque de renfort 29 portée par le premier élément 26, la plaque de renfort 29 s'insérant dans le logement 11 à l'état assemblé du connecteur 3. La plaque de renfort 29 s'étend dans la direction longitudinale par exemple le long du premier élément 26. La plaque de renfort 29 traverse par exemple le socle 25.

Un dégagement 30 à fond cylindrique, complémentaire au premier axe transversal 12 du logement 11, peut être ménagé dans la plaque de renfort 29 pour coopérer avec le premier axe transversal 12 afin de guider le positionnement longitudinal du connecteur 3 et former une butée dans l'axe d'insertion du connecteur 3.

Le dispositif de connexion 15 peut comporter un moyen de maintien comprenant au moins deux faces latérales 33 opposées, configurées pour venir en butée sur les parois latérales 13 du logement 11. Les faces latérales 33 peuvent être reliées entre elles par une plaque transversale agencée perpendiculairement aux plaques de renfort 29.

Le connecteur 3 de type « side-lock » ou « side-hook» peut ainsi être fixé de manière stable et réversible à l'embase 10 du balai 2 par un ou plusieurs moyens de maintien connectés au balai 2 du côté supérieur au balai.

Le dispositif de fixation 15 peut de plus comporter au moins une patte latérale de verrouillage 22a, 22b faisant saillie perpendiculairement de la paroi latérale 17 en direction du logement 11 de l'embase 10, la patte latérale de verrouillage 22a, 22b étant configurée pour coopérer avec une bordure latérale 24 du balai d'essuie-glace 2 agencée à l'opposé du logement 11, du côté inférieur si l'on considère que le logement 11 débouche en partie supérieure du balai 2.

Dans l'exemple, le dispositif de connexion 15 comporte deux pattes latérales de verrouillage 22a, 22b agencées aux extrémités longitudinales de la paroi latérale 17. Les pattes latérales de verrouillage 22a, 22b sont de même longueur et peuvent être de même largeur.

On peut prévoir d'agencer seulement une patte latérale de verrouillage notamment au milieu de l'extrémité inférieure de la paroi latérale 17. On peut aussi prévoir d'agencer plus de deux pattes de verrouillage le long de l'extrémité inférieure de la paroi latérale 17, en les espaçant de manière régulière les unes des autres.

Ainsi en utilisation, lorsqu'un utilisateur assemble le connecteur 3 au balai 2, il appuie sur le premier élément 26 du connecteur 3, insérant le premier axe transversal 12 entre les pattes élastiques 21a, 21b du connecteur 3 qui le retiennent par emboitage élastique. Les crochets élastiques 27a, 27b coopèrent avec un pion cylindrique transversale 28a, 28b complémentaire du logement 11. Le premier élément 26 peut ainsi être retenu au balai 2.

Le premier axe transversal 12 destiné à être connecté à un bras d'actionnement dans un dispositif top-lock est ainsi utilisé comme élément de connexion du balai 2 au connecteur 3 dans le dispositif « side-lock » ou « ou side-hook ». Le connecteur 3 vient ainsi se fixer directement sur le premier axe transversal 12 à la place de l'adaptateur 14.

Du côté inférieur du balai 2, c'est-à-dire du opposé au côté de l'embase 10, les pattes latérales de verrouillage 22a, 22b se clippent sur la bordure latérale 24 du flanc du balai 2. Ce clippage est rendu possible du fait que les moyens de maintien 21a, 21b retiennent le premier élément 26 à l'embase 10. On dispose ainsi d'un verrouillage à la fois en partie supérieur et en partie inférieur du connecteur 3, ce qui assure un maintien stable et durable du connecteur 3 au balai 2.

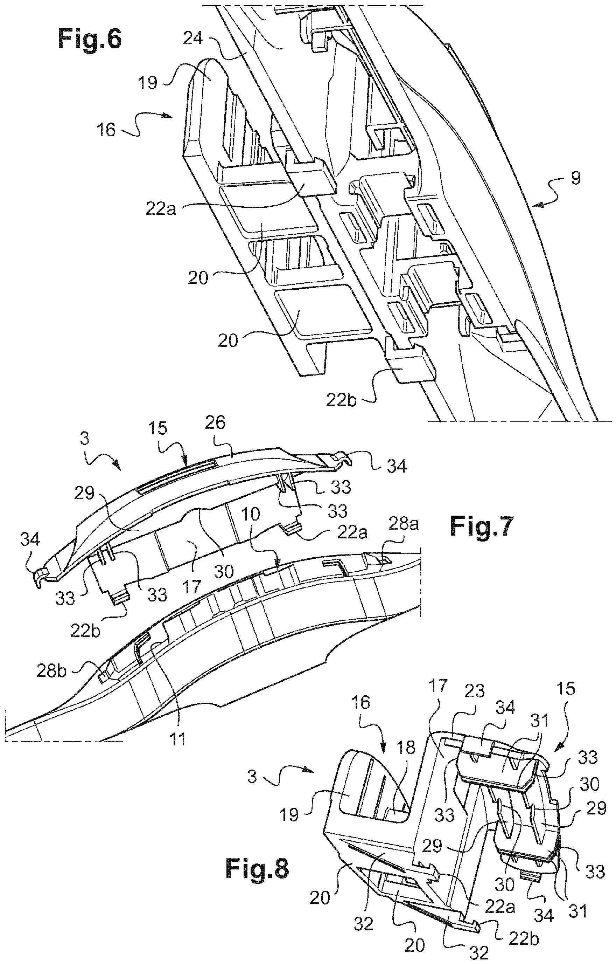

Les figures 6 et 7 représentent un deuxième mode de réalisation du connecteur 3.

Comme dans le premier exemple de réalisation, le connecteur 3 peut comporter au moins une plaque de renfort 29 portée par le premier élément 26, s'étendant dans la direction longitudinale et s'insérant dans le logement 11 à l'état assemblé du connecteur 3. Un dégagement 30 à fond cylindrique complémentaire au premier axe transversal 12 peut être ménagé dans la plaque de renfort 29, pour guider le positionnement du connecteur 3. On prévoit ainsi par exemple deux plaques de renfort 29 agencées en parallèle sous le premier élément 26.

Dans cet exemple, le moyen de maintien n'est pas configuré pour coopérer par emboitage élastique avec le logement 11 de l'embase 10.

Le connecteur 3 peut cependant comporter deux languettes 34 agencées aux deux extrémités longitudinales du premier élément 26 pour cacher les petits renfoncements aux deux extrémités du logement 11 de l'embase 10, dans la partie supérieure du logement 11, sans clipsage.

Un moyen de maintien du dispositif de connexion 15 comprend au moins une joue 31 portant deux faces latérales 33 opposées, configurées pour venir en butée sur les parois latérales 13 du logement 11.

Deux paires de joues 31 parallèles sont par exemple agencées sous le premier élément 26, chaque paire étant interposée entre le dégagement 30 et une languette 34.

Le dispositif de fixation 15 comporte de plus au moins une patte latérale de verrouillage 22a, 22b faisant saillie perpendiculairement de la paroi latérale 17 en direction du logement 11 de l'embase 10, la patte latérale de verrouillage 22a, 22b étant configurée pour coopérer avec une bordure latérale 24 du balai d'essuie-glace 2 agencée à l'opposé du logement 11.

De plus dans cet exemple, l'interface latérale 16 du connecteur 3 porte au moins une nervure de rigidification 32 reliant le fond 20 de l'interface 16 aux dos d'une patte latérale de verrouillage 22a, 22b. Deux nervures de rigidification 32, plates et parallèles, relient ainsi par exemple chaque patte latérale de verrouillage 22a, 22b au fond 20 de l'interface 16.

Ainsi en utilisation, lorsqu'un utilisateur assemble le connecteur 3 au balai 2, il appuie sur le premier élément 26 du connecteur 3, insérant les joues 31 dans le logement 11, les faces latérales 33 des joues 31 venant en butée dans le logement 11.

Du côté inférieur du balai 2, les pattes latérales de verrouillage 22a, 22b se clippent sur la bordure latérale 24 du flanc du balai 2. Ce clippage est rendu possible par déformation du pontet 23 et par blocage du premier élément 26 dans l'embase 10 par le moyen de maintien. On dispose ainsi d'un verrouillage à la fois en partie supérieur et en partie inférieur du connecteur 3, ce qui assure un maintien stable et durable du connecteur 3 au balai 2.

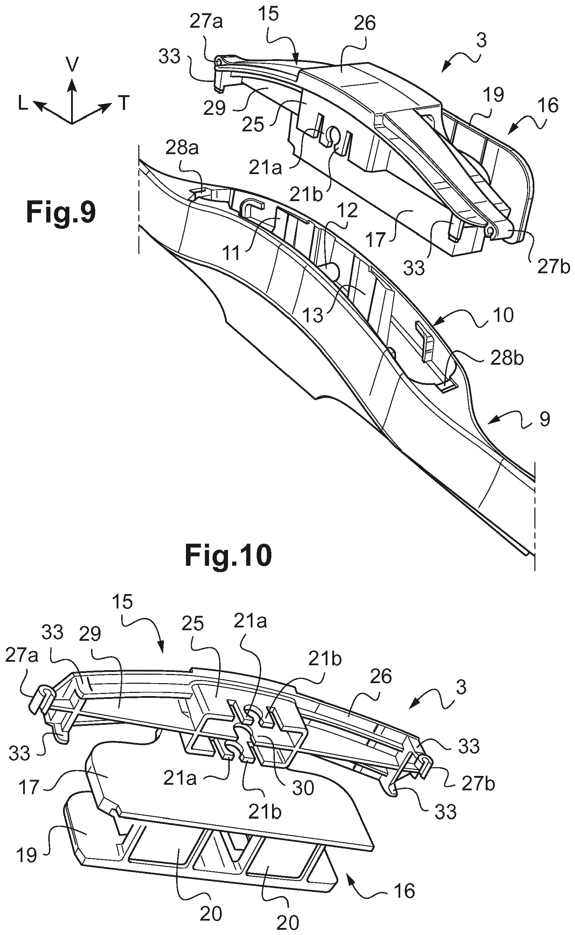

Les figures 9 et 10 représentent un troisième mode de réalisation du connecteur 3.

Comme dans le premier exemple de réalisation, dans cet exemple, le dispositif de connexion 15 comporte au moins un moyen de maintien 21a, 21b, 27a, 27b configuré pour coopérer par emboitage élastique avec au moins un élément 12, 28a, 28b agencé à l'intérieur du logement 11 de l'embase 10 du balai d'essuie-glace 2.

Le moyen de maintien comporte par exemple au moins une paire de pattes élastiques 21a, 21b configurées pour coopérer par emboitage élastique avec le premier axe transversal 12 agencé à l'intérieur du logement 11 de l'embase 10 du balai d'essuie-glace 2.

Le moyen de maintien peut comporter deux crochets élastiques 27a, 27b agencés aux deux extrémités longitudinales du premier élément 26, chaque crochet élastique 27a, 27b étant configuré pour coopérer avec un pion cylindrique transversal 28a, 28b complémentaire agencé à l'intérieur du logement 11.

Le moyen de maintien peut comporter au moins deux faces latérales 33 opposées, configurées pour venir en butée sur les parois latérales 13 du logement 11.

Ces moyens de maintien suffisent pour fixer le connecteur 3 de manière stable et réversible à l'embase 10 du balai 2. En effet, dans ce troisième mode de réalisation, le dispositif de fixation 15 ne comporte pas de patte latérale de verrouillage 22a, 22b.

## Revendications

1. Connecteur (3) pour assembler un bras d'actionnement de véhicule automobile à un balai d'essuie-glace (2), ledit connecteur (3) comprenant :
- un dispositif de connexion (15) configuré pour coopérer avec une embase (10) d'un balai d'essuie-glace (2) pour fixer le connecteur (3) au balai d'essuie-glace (2) de manière réversible,
- une interface latérale (16) portée par une paroi latérale (17) du dispositif de connexion (15), ladite interface (16) comportant un deuxième axe transversal (18) destiné à être relié à un bras d'actionnement,
le dispositif de connexion (15) comportant :
- un premier élément (26) destiné à coopérer avec un logement (11) de l'embase (10) du balai d'essuie-glace (2), le premier élément (26) étant relié à la paroi latérale (17) par au moins un pontet (23), **caractérisé en ce que** le dispositif de connexion (15) comporte
- au moins une patte latérale de verrouillage (22a, 22b) faisant saillie perpendiculairement de la paroi latérale (17) en direction du logement (11), la patte latérale de verrouillage (22a, 22b) étant configurée pour coopérer avec une bordure latérale (24) du balai d'essuie-glace (2) agencée du côté opposé au logement (11).

2. Connecteur (3) selon la revendication précédente, **caractérisé en ce que** le dispositif de connexion (15) comporte deux pattes latérales de verrouillage (22a, 22b) situées aux extrémités longitudinales de la paroi latérale (17).

3. Connecteur (3) selon l'une des revendications précédentes, **caractérisé en ce que** le dispositif de connexion (15) comporte un moyen de maintien (21a, 21b, 27a, 27b) configuré pour coopérer par emboitage élastique avec au moins un élément (12, 28a, 28b) agencé à l'intérieur du logement (11) de l'embase (10) du balai d'essuie-glace (2).

4. Connecteur (3) selon la revendication précédente, **caractérisé en ce que** le moyen de maintien comporte au moins une paire de pattes élastiques (21a, 21b) configurées pour coopérer par emboitage élastique avec un premier axe transversal (12) agencé à l'intérieur du logement (11).

5. Connecteur (3) selon la revendication précédente, **caractérisé en ce que** les pattes élastiques (21a, 21b) sont formées dans un socle (25) du dispositif de connexion (15) fixé sous le premier élément (26), le socle (25) présentant une forme de cadre, une paire de pattes élastiques (21a, 21b) étant formée dans chaque paroi longitudinale du cadre.

6. Connecteur (3) selon l'une des revendications précédentes, **caractérisé en ce que** le dispositif de connexion (15) comporte un moyen de maintien comprenant deux crochets élastiques (27a, 27b) agencés aux deux extrémités longitudinales du premier élément (26), chaque crochet élastique (27a, 27b) étant configuré pour coopérer avec un pion cylindrique transversal (28a, 28b) complémentaire agencé à l'intérieur du logement (11).

7. Connecteur (3) selon l'une des revendications précédentes, **caractérisé en ce que** le dispositif de connexion (15) comporte un moyen de maintien comprenant au moins deux faces latérales (33) opposées, configurées pour venir en butée sur des parois latérales (13) du logement (11).

8. Connecteur (3) selon la revendication précédente, **caractérisé en ce que** le dispositif de connexion (15) comporte au moins une paire de joues (31), chaque joue (31) portant deux faces latérales (33) opposées.

9. Connecteur selon l'une des revendications précédentes, **caractérisé en ce que** l'interface latérale (16) porte au moins une nervure de rigidification (32) reliant un fond (20) de l'interface (16) au dos d'une patte latérale de verrouillage (22a, 22b).

10. Connecteur (3) selon l'une des revendications précédentes, **caractérisé en ce que** le dispositif de connexion (15) comporte au moins une plaque de renfort (29) portée par le premier élément (26), la plaque de renfort (29) étant configurée pour s'insérer dans le logement (11) de l'embase (10), un dégagement (30) à fond cylindrique complémentaire à un premier axe transversal (12) du logement (11) étant ménagé dans la plaque de renfort (29) pour guider le dispositif de connexion (15) dans l'embase (10).

11. Connecteur (3) selon l'une des revendications précédentes, **caractérisé en ce que** le premier élément (26) est un capot configuré pour fermer le logement (11).

12. Connecteur (3) selon l'une des revendications précédentes, **caractérisé en ce que** le premier élément (26) porte au moins un moyen de maintien (21a, 21b, 27a, 27b, 33) destiné à être inséré dans le logement (11) pour coopérer avec au moins un élément (12, 28a, 28b, 13) du logement (11).

13. Dispositif d'essuyage (1) comportant un connecteur (3) selon l'une des revendications précédentes.

## Patentansprüche

1. Anschlussstück (3), um einen Betätigungsarm eines Kraftfahrzeugs mit einem Scheibenwischerblatt (2) zusammenzubauen, wobei das Anschlussstück (3) aufweist:
- eine Verbindungsvorrichtung (15), die konfiguriert ist, um mit einer Basis (10) eines Scheibenwischerblatts (2) zusammenzuwirken, um das Anschlussstück (3) an dem Scheibenwischerblatt (2) reversibel zu befestigen,
- eine seitliche Schnittstelle (16), die von einer Seitenwand (17) der Verbindungsvorrichtung (15) getragen ist, wobei die Schnittstelle (16) eine zweite Querachse (18) aufweist, die dazu bestimmt ist, mit einem Betätigungsarm verbunden zu werden,
wobei die Verbindungsvorrichtung (15) aufweist:
- ein erstes Element (26), das dazu bestimmt ist, mit einer Aufnahme (11) der Basis (10) des Scheibenwischerblatts (2) zusammenzuwirken, wobei das erste Element (26) durch mindestens einen Steg (23) mit der Seitenwand (17) verbunden ist, **dadurch gekennzeichnet, dass** die Verbindungsvorrichtung (15) aufweist
- mindestens eine seitliche Verriegelungslasche (22a, 22b), die senkrecht von der Seitenwand (17) in Richtung der Aufnahme (11) hervorsteht, wobei die seitliche Verriegelungslasche (22a, 22b) konfiguriert ist, um mit einem seitlichen Rand (24) des Scheibenwischerblatts (2) zusammenzuwirken, der auf der gegenüberliegenden Seite der Aufnahme (11) ausgebildet ist.

2. Anschlussstück (3) nach dem vorhergehenden Anspruch, **dadurch gekennzeichnet, dass** die Verbindungsvorrichtung (15) zwei seitliche Verriegelungslaschen (22a, 22b) aufweist, die an den Längsenden der Seitenwand (17) angeordnet sind.

3. Anschlussstück (3) nach einem der vorhergehenden Ansprüche, **dadurch gekennzeichnet, dass** die Verbindungsvorrichtung (15) ein Haltemittel (21a, 21b, 27a, 27b) aufweist, das konfiguriert ist, um durch Schnappverbindung mit mindestens einem Element (12, 28a, 28b) zusammenzuwirken, das im Inneren der Aufnahme (11) der Basis (10) des Scheibenwischerblatts (2) eingerichtet ist.

4. Anschlussstück (3) nach dem vorhergehenden Anspruch, **dadurch gekennzeichnet, dass** das Haltemittel mindestens ein Paar elastische Laschen (21a, 21b) aufweist, die konfiguriert sind, um durch Schnappverbindung mit einer ersten Querachse (12) zusammenzuwirken, die im Inneren der Aufnahme (11) eingerichtet ist.

5. Anschlussstück (3) nach dem vorhergehenden Anspruch, **dadurch gekennzeichnet, dass** die elastischen Laschen (21a, 21b) in einem Sockel (25) der Verbindungsvorrichtung (15) gebildet sind, der unter dem ersten Element (26) befestigt ist, wobei der Sockel (25) eine Rahmenform aufweist, wobei ein Paar elastische Laschen (21a, 21b) in jeder Längswand des Rahmens gebildet ist.

6. Anschlussstück (3) nach einem der vorhergehenden Ansprüche, **dadurch gekennzeichnet, dass** die Verbindungsvorrichtung (15) ein Haltemittel aufweist, das zwei elastische Haken (27a, 27b) aufweist, die an den zwei Längsenden des ersten Elements (26) ausgebildet sind, wobei jeder elastische Haken (27a, 27b) konfiguriert ist, um mit einem zylindrischen Querstift (28a, 28b) zusammenzuwirken, der im Inneren der Aufnahme (11) eingerichtet ist.

7. Anschlussstück (3) nach einem der vorhergehenden Ansprüche, **dadurch gekennzeichnet, dass** die Verbindungsvorrichtung (15) ein Haltemittel aufweist, das mindestens zwei gegenüberliegende Seitenflächen (33) aufweist, die konfiguriert sind, um auf Seitenwänden (13) der Aufnahme (11) in Anschlag zu kommen.

8. Anschlussstück (3) nach dem vorhergehenden Anspruch, **dadurch gekennzeichnet, dass** die Verbindungsvorrichtung (15) mindestens ein Paar Backen (31) aufweist, wobei jede Backe (31) zwei gegenüberliegende Seitenflächen (33) trägt.

9. Anschlussstück nach einem der vorhergehenden Ansprüche, **dadurch gekennzeichnet, dass** die seitliche Schnittstelle (16) mindestens eine Versteifungsrippe (32) trägt, die eine Rückseite (20) der Schnittstelle (16) mit dem Rücken einer seitlichen Verriegelungslasche (22a, 22b) verbindet.

10. Anschlussstück (3) nach einem der vorhergehenden Ansprüche, **dadurch gekennzeichnet, dass** die Verbindungsvorrichtung (15) mindestens eine Verstärkungsplatte (29) aufweist, die von dem ersten Element (26) getragen ist, wobei die Verstärkungsplatte (29) konfiguriert ist, um in die Aufnahme (11) der Basis (10) eingefügt zu werden, wobei ein Zwischenraum (30) mit zylindrischem Boden, der zu einer ersten Querachse (12) der Aufnahme (11) komplementär ist, in der Verstärkungsplatte (29) ausgebildet ist, um die Verbindungsvorrichtung (15) in der Basis (10) zu führen.

11. Anschlussstück (3) nach einem der vorhergehenden Ansprüche, **dadurch gekennzeichnet, dass** das erste Element (26) eine Kappe ist, die konfiguriert ist, um die Aufnahme (11) zu schließen.

12. Anschlussstück (3) nach einem der vorhergehenden Ansprüche, **dadurch gekennzeichnet, dass** das erste Element (26) mindestens ein Haltemittel (21a, 21b, 27a, 27b, 33) trägt, das dazu bestimmt ist, in die Aufnahme (11) eingefügt zu werden, um mit mindestens einem Element (12, 28a, 28b, 13) der Aufnahme (11) zusammenzuwirken.

13. Wischvorrichtung (1), umfassend ein Anschlussstück (3) nach einem der vorhergehenden Ansprüche.

## Claims

1. Connector (3) for assembling a drive arm of a motor vehicle to a windscreen wiper (2), said connector (3) comprising:
- a connection device (15) designed to interact with a base (10) of a windscreen wiper (2) to reversibly secure the connector (3) to the windscreen wiper (2),
- a side interface (16) on a side wall (17) of the connection device (15), said interface (16) comprising a second transverse pin (18) designed to be connected to a drive arm,
the connection device (15) comprising a first member (26) designed to interact with a housing (11) in the base (10) of the windscreen wiper (2), the first member (26) being connected to the side wall (17) by at least one bridge (23), **characterized in that** the connection device (15) comprises
- at least one side locking tab (22a, 22b) projecting perpendicularly from the side wall (17) in the direction of the housing (11), the side locking tab (22a, 22b) being designed to interact with a side edge (24) of the windscreen wiper (2) arranged on the opposite side to the housing (11).

2. Connector (3) according to the preceding claim, **characterized in that** the connection device (15) comprises two side locking tabs (22a, 22b) located at the longitudinal ends of the side wall (17).

3. Connector (3) according to one of the preceding claims, **characterized in that** the connection device (15) comprises a retention means (21a, 21b, 27a, 27b) designed to interact by snap-fitting with at least one member (12, 28a, 28b) arranged inside the housing (11) in the base (10) of the windscreen wiper (2).

4. Connector (3) according to the preceding claim, **characterized in that** the retention means comprises at least one pair of elastic tabs (21a, 21b) designed to interact by snap-fitting with a first transverse pin (12) arranged inside the housing (11).

5. Connector (3) according to the preceding claim, **characterized in that** the elastic tabs (21a, 21b) are made in a substructure (25) of the connection device (15) fixed under the first member (26), the substructure (25) taking the form of a frame, a pair of elastic tabs (21a, 21b) being formed in each longitudinal wall of the frame.

6. Connector (3) according to one of the preceding claims, **characterized in that** the connection device (15) comprises a retention means with two elastic hooks (27a, 27b) arranged at the two longitudinal ends of the first member (26), each elastic hook (27a, 27b) being designed to interact with a complementary transverse cylindrical peg (28a, 28b) arranged inside the housing (11).

7. Connector (3) according to one of the preceding claims, **characterized in that** the connection device (15) comprises a retention means with at least two side faces (33) which are opposite one another and configured so as to come into abutment against side walls (13) of the housing (11).

8. Connector (3) according to the preceding claim, **characterized in that** the connection device (15) comprises at least one pair of flanges (31), each flange (31) having two opposite side faces (33).

9. Connector according to one of the preceding claims, **characterized in that** the side interface (16) has at least one stiffening rib (32) connecting a bottom (20) of the interface (16) with the back of a side locking tab (22a, 22b).

10. Connector (3) according to one of the preceding claims, **characterized in that** the connection device (15) comprises at least one reinforcing plate (29) on the first member (26), the reinforcing plate (29) being designed to be inserted in the housing (11) in the base (10), a notch (30) with a cylindrical bottom, complementary to a first transverse pin (12) of the housing (11), being made in the reinforcing plate (29) to guide the connection device (15) in the base.

11. Connector (3) according to one of the preceding claims, **characterized in that** the first member (26) is a cover designed to close the housing (11).

12. Connector (3) according to one of the preceding claims, **characterized in that** the first member (26) has at least one retention means (21a, 21b, 27a, 27b, 33) designed to be inserted in the housing (11) to interact with at least one member (12, 28a, 28b, 13) of the housing (11).

13. Wiper device (1) comprising a connector (3) according to one of the preceding claims.
